Europäisches Patentamt

European Patent Office

Office européen des brevets

(11) Publication number: 0 377 234
A1

## EUROPEAN PATENT APPLICATION

(21) Application number: 89202712.9

(22) Date of filing: 27.10.89

(51) Int. Cl.5: E21B 41/00, E21B 19/22, G01B 21/12, G01B 21/20

(30) Priority: 07.12.88 US 281147

(43) Date of publication of application:
11.07.90 Bulletin 90/28

(84) Designated Contracting States:
DE FR GB IT NL

(71) Applicant: PUMPTECH N.V.
Atlantic House Noorderlaan 147 Bus 5C
B-2030 Antwerpen(BE)
(84) DE GB IT NL

Applicant: COMPAGNIE DES SERVICES
DOWELL SCHLUMBERGER
20, rue Jean-Jaurès
92 Montrouge(FR)
(84) FR

(72) Inventor: Mc Bride, Roger
7719 South Joplin
Tulsa, OK(US)

(74) Representative: Richebourg, Michel
Dowell Schlumberger Z.I. Molina Chazotte
F-42000 Saint-Etienne(FR)

(54) Method and apparatus for monitoring the integrity of coiled tubing.

(57) The onset of potential failure of a coiled tubing string is indicated by a diameter expansion or necking down of coiled tubing. The continuous monitoring of the diameter of the coiled tubing serves as a means and method for predicting the onset of such failure so that action can be taken to prevent failure prior to its occurrence.

Fig. 2

# METHOD AND APPARATUS FOR MONITORING THE INTEGRITY OF COILED TUBING

This invention relates to the art of well treatment utilizing coiled tubing and, more particularly, to an apparatus and a method whereby the serviceability and remaining life of a coiled tubing string may be determined.

## Background of the Invention

In the production of subterranean materials such as hydrocarbons, water and geothermal energy, it is occasionally necessary to re-enter the wellbore for any number of purposes such as injection of stimulation fluids, displacement of fluids in the well and/or various cleaning operations within the well conduit. One typical means for performing such operations is through the use of relatively small diameter, thin-walled, continuous length coiled tubing which is forced deep into the well from the surface. Typically, several thousand feet of such coiled tubing is provided on a reel located on a truck, trailer or skid which is fed through an injector apparatus which forces the coiled tubing into the well.

Coiled tubing is made from soft-sheet steel which is rolled and induction welded along its length then spooled onto the deployment reel. The tubing is then heat-treated, on the reel, to stress relieve the steel tubing wall and the seam weld. Several lengths of string may be butt-welded together to achieve the desired length of tubing for reaching the treatment zone in the well.

In the deployment of coiled tubing, the tubing is uncoiled from the reel, typically at or near ground level and passed over a goose-neck and into an injector head located axially above the wellhead and the wellbore. The injector head is typically elevated from the surface at a height of from ten to seventy-five feet or more in order to be located above the wellhead (Christmas tree) valving and/or as required to accommodate various wellbore tools to be run in the well on the coiled tubing. The injector head typically comprises a dual chain-driven mechanism which grips the coiled tubing on either side and drives it downwardly into the well during the injection of the tubing or, alternatively, pulls the tubing out of the well.

The stresses on coiled tubing are often repeated and extreme. In the course of a typical coiled tubing treatment, the coiled tubing is plastically deformed as it is drawn from the reel coil upwardly to the goose-neck. It is then again plastically deformed over the goose-neck and into the injector head. Up to this point, the coiled tubing is in mild tension due to the pulling force of the injector head drive mechanism and a braking or rewind force applied at the reel. Within the injector head, the coiled tubing is again plastically deformed to a substantially straight configuration for injection into the well. However, the coiled tubing leaving the injector head and going into the well is not perfectly straight and is, thus, disposed in the well in a long helix. Additionally, this helix of coiled tubing is in compression due to the drive forces of the injector head and the counter-balancing frictional forces against the coiled tubing as the helix engages the walls of the well tubing.

Once the zone of treatment has been reached by the tools located on the end of the coiled tubing, typical operations may require cycling of the coiled tubing upwardly and downwardly over an interval up to hundreds of feet with the consequent bending and unbending of portions of the coiled tubing located at or near the surface as they pass and re-pass the injector head, the goose-neck and the coiled tubing reel. During treatment operations, the tubing is again stressed by pressure forces of treatment fluids within the tubing. Finally, in removing the coiled tubing from the well, the entire length of the deployed tubing is again subjected to all of the plastic bending required for its injection, in reverse order as it is wound back onto its reel.

After a certain amount of cycling, failure of all or a portion of the coiled tubing string becomes inevitable. Failure of coiled tubing may result in fracturing of the tubing walls causing leakage or complete breakage of the tubing. Repair of fractured tubing usually involves removing up to one hundred feet of tubing adjacent the fracture and butt welding a new section in its place. In order to avoid the time and expense of retrieving a broken length of tubing from a wellbore after catastrophic failure through a "fishing operation" or the "tripping" of a well's production string or the aforementioned problems of replacing fractured sections of tubing, it has been the practice in the industry to "retire" a coil of tubing after a fixed number of well operations. Such retirement is based on a conservative average lifetime for a coiled tubing reel established through analysis of empirical data on coiled tubing life over a number of coiled tubing units.

It has been noted in a number of failed coiled tubing strings that there is a thinning of the tubing walls and an expansion of the tubing diameter in the region of the failure. However the diameter expansion of the coiled tubing is not of such a magnitude that it can be detected and avoided by visual inspection of the coiled tubing during its use. Even if visual inspection could detect impending failure, visual inspection of fifteen thousand feet or more of coiled tubing would be totally impractical on any sort of regular basis.

In addition to the failure of coiled tubing due to accumulated bending stresses, it has been noted that field-generated butt welds pose an additional problem to the failure of coiled tubing because proper heat treating of the weld is difficult in field operations. The onset of failure of these butt welds is typically identified in a working tubing string by a loss in diameter or "necking down" of the coiled tubing, again, not easily identified by visual examination.

Summary of the Invention

The present invention provides a method and apparatus for monitoring coiled tubing integrity by continuously gauging the diameter of the coiled tubing during use so that the onset of failure either through expansion due to plastic deformation or necking down due to improper heat treatment of a butt weld can be detected prior to tubing failure.

In accordance with the invention, a method of monitoring coiled tubing integrity comprises providing diameter measuring means through which coiled tubing is passed, continuously monitoring the diameter of the coiled tubing and providing an indication of variance from a acceptable diameter range which indicates the potential for coiled tubing failure.

Further in accordance with the invention, an apparatus is provided for monitoring the diameter of a length of coiled tubing and indicating a variance from acceptable diameter variation limits.

It is therefore an object of this invention to provide a method and means whereby the integrity of coiled tubing may be monitored so that the impending onset of coiled tubing failure may be indicated and so that the coiled tubing reel or, at a minimum, the defective portion of the coiled tubing, may be removed from service prior to failure.

It is yet another object of this invention to provide a more reliable means of monitoring and predicting the onset of coiled tubing failure in well operations.

Brief Description of the Drawings

The invention will be further described in the more limited aspects of a preferred embodiment thereof and in conjunction with accompanying drawings forming a part of this specification and in which:-

Figure 1 is perspective view of one type of coiled tubing unit in which the present invention is employed;

Figure 2 is a cross-sectional view of the diameter measuring apparatus used in accordance with a preferred embodiment of the present invention;

Figure 3 is a cross-sectional view of the apparatus of Figure 2 taken along lines 3-3 thereof, and

Figure 4 is a schematic diagram of the electronic apparatus used in conjunction with the diameter monitoring apparatus of Figures 2 and 3 in accordance with the present invention.

Detailed Description of the Preferred Embodiments and the Drawings

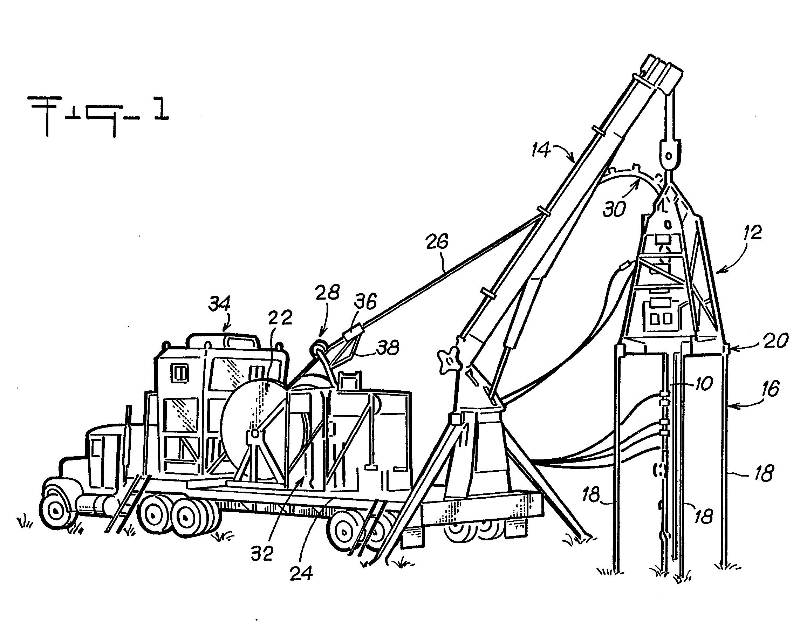

Referring now to the drawings wherein the showings are for the purposes of illustrating a preferred embodiment of the invention only and not for the purpose of limiting same. Figure 1 shows a wellhead apparatus incorporating normal valves, blow-out preventers, and the like which are common in the art. A coiled tubing injector drive head 12 is suspended above the wellhead 10 by a crane 14. Stanchion member 16 incorporating legs 18 and table 20 also partially support the injector drive head 12 and act to maintain it in a position centrally located over the wellhead 10. It will be understood that other means for supporting the coiled tubing injector drive head 12 above the wellhead 10 may be provided such as suspension from a derrick situated over the wellhead and the like.

A coiled tubing reel 22 is located on a truck bed 24 with its axis disposed horizontally. The coiled tubing 26 is payed out from the reel through a travelling guide member 28 upwardly to a gooseneck 30 which feeds the coiled tubing 26 into the injector drive head 12.

A motor and hydraulic pump apparatus 32 is provided on the truck bed 24 in order to provide hydraulic power to the various power systems of the unit such as the injector drive head, the crane, the reel drive motor, etc. Operations of the coiled tubing unit are controlled and monitored from within a control booth 34 also located on the truck bed 24.

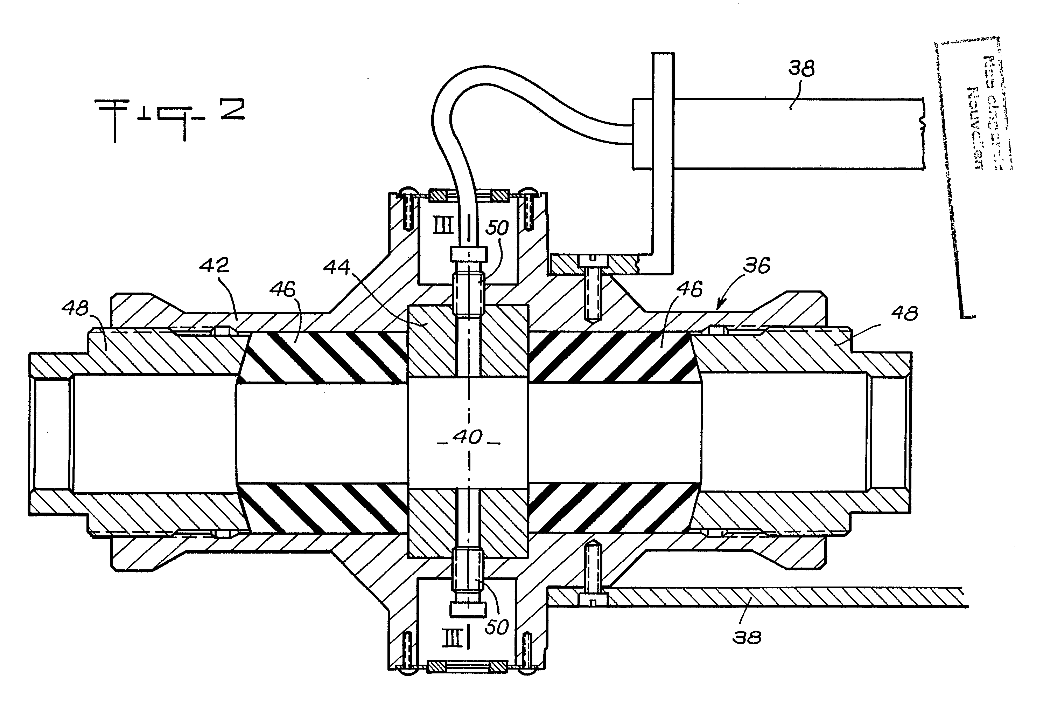

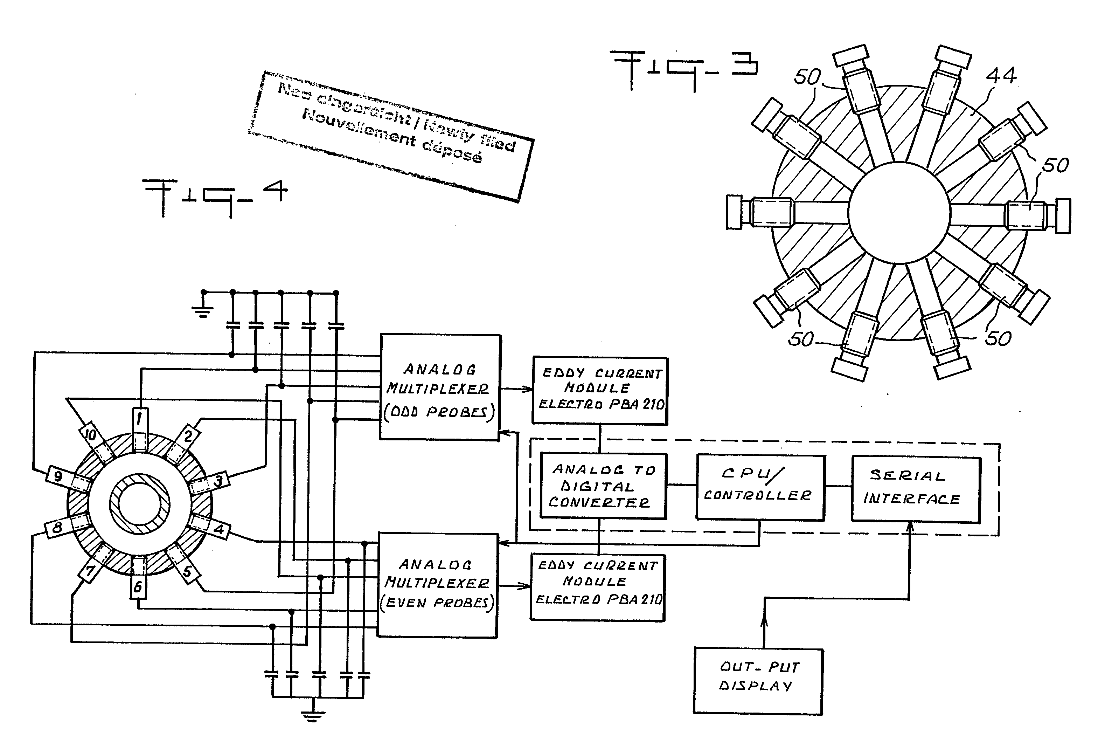

In accordance with the invention, the coiled tubing 26 passes through a tubing diameter monitoring sleeve 36 as it passes into the well. Although the tubing diameter monitoring sleeve 36 may be located at any point along the travel path of the coiled tubing 26 such as within the wellhead, at or above the injector drive head or the like, the tubing diameter monitoring sleeve is most easily mounted using bracing members 38 attached to the travelling guide member 28. The tubing diameter monitoring sleeve 36 continuously monitors the diameter of the coiled tubing 26 as it passes through its central bore 40 (Figs. 2 and 3) and compares the monitored diameter with the nominal diameter of the coiled tubing and an acceptable range of variance therefrom. One commonly used diameter for coiled tubing is 1.250 inches. It has been found that a variance of from about +0.050 inch to about -0.010 inch are acceptable limits for expansion or necking down respectively of this size of coiled tubing prior to its being removed from service due to impending failure.

Referring now to Figures 2 and 3, the tubing diameter monitoring sleeve 36 generally comprises a sleeve body 42 and a tubing diameter detector means 44 mounted within the sleeve body 42, all including the central bore 40. The sleeve body 42 also includes substantially cylindrical elastomeric wiper members 46 which are retained within the sleeve body 42 by threaded ring members 48. The diameter of the central bore 40 of the elastomeric wiper members 46 is preferably the nominal diameter of the coiled tubing to be monitored. The elastomeric wiper members 46 may be made of any common elastomeric materials which allows reduced friction such as hard rubber, nylon or, most preferably, polyethylene. It will be understood that all of these components may be split longitudinally so that the sleeve 36 including its various components may be easily mounted with the coiled tubing passing therethrough.

In accordance with a preferred embodiment of the invention, the tubing diameter detector means 44 comprises a plurality of radially arrayed pairs of eddy current proximeters 50. The proximeters 50 are mounted in an annular body 52 and paired diametrically to continuously monitor the diameter of the passing coiled tubing by eddy current measuring techniques. The diameter measurement taken by the plurality of such diametrically paired eddy current proximeters 50 is multiplexed and averaged so as to indicate the true diameter of the passing coiled tubing and any variance from its nominal diameter.

Figure 4 illustrates in schematic form the electronic processing of the proximeters' signals to an output device. The proximeters operate at one of two frequencies (161 kH$_z$ and 289 kH$_z$) to reduce adjacent probe loading from transformer coupling. The higher frequency (even numbered) probes use smaller tuning capacitors (3,300 pf) than the lower frequency (odd numbered) probes (10,000 pf). Diagonally opposite probes are coupled by the solid-state analog multiplexers to an Electro Corporation eddy current module model number PBA2101. An eight bit analog to digital converter, which is part of a Motorola 68HC11 microcomputer, digitizes the analog displacement signal from the eddy current module. This displacement is then sent serially to a remote graphic display or other read-out device. In the preferred embodiment hereof, the graphic display indicates the measured diameter variance from the standard or nominal diameter of the coiled tubing and clearly indicates when an acceptable variance value has been exceeded. The monitoring electronics may also incorporate an alarm system to clearly indicate to the operator when such acceptable limits have been exceeded. Additionally, electronic recording means may also be incorporated so that a permanent record is made of the coiled tubing diameter as a function of depth and time.

The operation of the eddy current proximeters 50 utilizes the principal that changing electromagnetic fields produce eddy currents in an electrically conductive material. Tubing cracks or flaws disturb the symmetry of the eddy currents which is reflected in the electromagnetic field itself. Distribution of these eddy currents is primarily at the surface of the tubing because of skin effects. At the preferred operating frequency of about 150 to 300 KH$_z$, only surface effects are noted, there being substantially no penetration of the eddy currents into the tubing steel.

Tubing outside diameter and ellipticity are measured by the proximeters 50 which are positioned radially around the perimeter of the tubing, paired diametrically and offset from its surface. The preferred proximeters and other associated electronics components are sold commercially by Electro Corporation for general electromagnetic proximity sensing.

Other means for detecting tubing diameter may be employed in the monitoring sleeve such as ultrasonic acoustic sensors or mechanical diameter sensors. These other types of sensors are paired diametrically and include a plurality of such pairs so that ellipticity of the coiled tubing is compensated for.

While the invention has been described in the more limited aspects of a preferred embodiment thereof, other embodiments have been suggested and still others will occur to those skilled in the art upon a reading and understanding of the foregoing specification. It is intended that all such embodiments be included within the scope of this invention as limited only by the appended claims.

## Claims

1. In a well operation in which a continuous length of coiled tubing is inserted into a wellbore, a method of monitoring the integrity of the coiled tubing comprises continuously monitoring the diameter of the coiled tubing along its length.

2. The process as set forth in claim 1 wherein said step of monitoring comprises electronically monitoring the tubing diameter.

3. The process as set forth in claim 1 wherein the step of monitoring comprises acoustically monitoring the tubing diameter.

4. The process as set forth in claim 1 wherein the step of monitoring comprises mechanically monitoring the tubing diameter.

5. The process as set forth in claim 1 wherein the step of monitoring comprises optically monitoring the tubing diameter.

6. The process as set forth in claim 1 further including the step of comparing the monitored diameter to a standard diameter and an acceptable variance therefrom.

7. The process as set forth in claim 6 further including the step of indicating a variance in tubing diameter in excess of the acceptable variance.

8. The process as set forth in claim 7 wherein said step of indicating comprises sounding an alarm.

9. The process as set forth in claim 6 further including the step of removing the coiled tubing from service when such acceptable variance is exceeded.

10. An apparatus for continuously monitoring the integrity of coiled tubing comprising measuring means for continuously monitoring a diameter of coiled tubing along its length and display means for indicating said diameter.

11. The apparatus as set forth in claim 10 wherein said measuring means comprises a plurality of diametrically paired, radially disposed eddy current proximeters.

12. The apparatus as set forth in claim 11 wherein electronic signals from said plurality of proximeters are multiplexed and averaged to provide an average diameter.

13. The apparatus as set forth in claim 10 wherein said measuring means is mounted in a substantially cylindrical sleeve with said coiled tubing passing axially through a central bore of said sleeve.

Fig-1

Fig-2

Fig-4

Fig-3

50    44

50

50    50

ANALOG
MULTIPLEXER
(ODD PROBES)

EDDY CURRENT
MODULE
ELECTRO PBA 210

ANALOG TO
DIGITAL
CONVERTER

CPU/
CONTROLLER

SERIAL
INTERFACE

ANALOG
MULTIPLEXER
(EVEN PROBES)

EDDY CURRENT
MODULE
ELECTRO PBA 210

OUT-PUT
DISPLAY

EP 0 377 234 A1

European Patent Office

# EUROPEAN SEARCH REPORT

Application Number

EP 89 20 2712

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 107 493 (CHEVRON RESEARCH CY) * Whole * | 1-8,10-13 | E 21 B 41/00 E 21 B 19/22 G 01 B 21/12 G 01 B 21/20 |
| Y | US-A-4 106 347 (DE KERLEGAND) * Column 6, lines 65-68,37-48; column 1, lines 50-52 * | 1,3,4,6 -8,10 | |
| Y | FR-A-2 393 270 (FRANZ PLASSER BANNBAUMASCHINEN) * Claims 1,2 * | 5 | |
| Y | US-A-4 710 712 (BRADFIELD) * Column 6, lines 15-21; column 5, lines 27-30; column 4, lines 46-50; column 10, lines 10-18 * | 2,11-13 | |
| A | | 1,10 | |
| A | US-A-2 882 488 (PRICE) * Figures 7,4; column 3, lines 65-71; column 6, lines 9-14 * | 1,2,4, 10,11, 13 | |
| A | US-A-4 404 853 (LIVINGSTON) * Claim 28; abstract; column 8, lines 27-34 * | 1,3,6, 10,13 | TECHNICAL FIELDS SEARCHED (Int. Cl.5) E 21 B G 01 B |
| A | US-A-4 041 773 (HAULDREN) * Whole * | 1,3,4,8 ,10 | |
| A | US-A-4 715 442 (KAHIL) * Whole * | 1,2,10, 11,13 | |
| A | US-A-4 585 061 (LYONS) * Whole * | 1 | |

The present search report has been drawn up for all claims

| Place of search | Date of completion of the search | Examiner |
|---|---|---|
| THE HAGUE | 19-03-1990 | SOGNO M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)